(19) **Europäisches Patentamt / European Patent Office / Office européen des brevets**

(11) **EP 4 309 894 A1**

(12) # EUROPEAN PATENT APPLICATION
published in accordance with Art. 153(4) EPC

(43) Date of publication:
**24.01.2024 Bulletin 2024/04**

(21) Application number: **22771483.9**

(22) Date of filing: **16.03.2022**

(51) International Patent Classification (IPC):
**B32B 27/18** (2006.01)     **B32B 27/34** (2006.01)
**B65D 65/40** (2006.01)

(52) Cooperative Patent Classification (CPC):
**B32B 27/18; B32B 27/34; B65D 65/40**

(86) International application number:
**PCT/JP2022/012054**

(87) International publication number:
**WO 2022/196738 (22.09.2022 Gazette 2022/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.03.2021 JP 2021044014**

(71) Applicant: **TOYOBO CO., LTD.**
**Osaka-shi, Osaka 530-0001 (JP)**

(72) Inventors:
- **GOTO, Takamichi**
  **Inuyama-shi, Aichi 484-8508 (JP)**
- **ENDO, Takuro**
  **Inuyama-shi, Aichi 484-8508 (JP)**

(74) Representative: **Vossius & Partner**
**Patentanwälte Rechtsanwälte mbB**
**Siebertstrasse 3**
**81675 München (DE)**

(54) **BIAXIALLY STRETCHED POLYAMIDE FILM AND LAMINATE FILM**

(57)     A biaxially stretched polyamide film, comprising a layer A containing 50 to 90% by mass of polyamide 6 and 10 to 50% by mass of polyamide 6 copolymer, a layer B containing 5 to 30% by mass of polyamide 6, 70 to 95% by mass of polyamide 6 copolymer, and 0 to 0.10% by mass of organic lubricant, and a layer C containing 70% by mass or more of polyamide 6 and 0.05 to 1% by mass of fine particles having an average particle diameter of 0.1 to 10 $\mu$m, wherein the layer B, the layer A, and the layer C are formed in this order; a critical surface tension on the layer B is 27.0 mN/m or higher; and on the surface of the layer B, a dispersion component yd of surface free energy is 27.0 mJ/m$^2$ or higher and a hydrogen bond component yh is 10.0 mJ/m$^2$ or lower.

EP 4 309 894 A1

**Description**

TECHNICAL FIELD

The present invention relates to a biaxially stretched polyamide film used as a packaging material, especially as a material for packaging food.

BACKGROUND ART

A biaxially stretched polyamide film has excellent tensile strength, bending strength, pinhole resistance, oil resistance, oxygen gas barrier property, and the like, and therefore, has been used as a packaging material, especially as a material for packaging food.

The biaxially stretched polyamide film is used for a packaging bag, for example, usually made by: laminating a polyolefin film that is capable of being heat-sealed (also referred to as a sealant film) such as polyethylene, polypropylene, or the like on the biaxially stretched polyamide film; and heat-sealing edges that become closed parts of a bag. However, a laminate film composed of the biaxially stretched polyamide film and the sealant film has a problem that when the laminate film is used as a liquid soup bag or a bag for a watery material, the films that have been laminated are separated since the adhesive strength (also referred to as lamination strength) between the films that have been laminated is insufficient. In particular, the laminate film has a disadvantage that when the laminate film is hydrothermally treated at high temperatures such as retorting, water penetrates between the films that have been laminated, and the lamination strength between the biaxially stretched polyamide film and the sealant film decreases greatly.

As a method for improving lamination strength, a method in which a film surface is coated in a film manufacturing process to increase adhesive strength has been proposed (see Patent Document 1). However, this method has a problem that the productivity is reduced, and the production cost increases. In addition, due to the coating, the method has a problem that blocking and defects such as a stripe and a flaw are generated, a problem that dots of printing ink are missing when printing is performed on a biaxially stretched polyamide film, etc. Therefore, a biaxially stretched polyamide film having excellent printability and having high lamination strength without a coating is desired.

Accordingly, a laminated polyamide film that is made by co-extruding layers including a surface layer in which copolymerized polyamide is blended to obtain an unstretched sheet, which is biaxially stretched has been proposed (see Patent Document 2). However, while lamination strength is improved by this method, the surface of the film has to be coated in a film manufacturing process to obtain high water-resistant lamination strength, so that not all of the previously mentioned problems can be solved.

Patent Document 3 and Patent Document 4 each disclose a laminated stretched polyamide film having a base layer and an easily adhesive layer, and the easily adhesive layer contains polyamide 6 and a polyamide 6 copolymer. However, as a result of hydrophilicity being improved by performing a corona treatment, water-resistant lamination strength may be decreased, or as a result of containing an organic lubricant in the easily adhesive layer, printing unevenness may occur.

RELATED ART DOCUMENT

[PATENT DOCUMENT]

[Patent document 1] JP2000-238216 A
[Patent document 2] JP2003-251772 A
[Patent document 3] WO2019/065161
[Patent document 4] WO2020/195795

SUMMARY OF THE INVENTION

PROBLEMS TO BE SOLVED BY THE INVENTION

An object of the present invention is to provide a biaxially stretched polyamide film having excellent adhesive strength, especially water-resistant lamination strength, and also having excellent printability, and a laminate film using this film.

MEANS FOR SOLVING THE PROBLEMS

As a result of earnest studies, the present inventors have found that the problems can be solved with a biaxially stretched polyamide film having an easily adhesive layer in which polyamide 6 copolymer is blended in a specific range laminated on a base layer composed essentially of polyamide 6, leading to the completion of the present invention.
The present invention is as follows.

[1] A biaxially stretched polyamide film comprising a layer A, a layer B, and a layer C, wherein

the layer A contains 50 to 90% by mass of polyamide 6 and 10 to 50% by mass of polyamide 6 copolymer,
the layer B contains 5 to 30% by mass of polyamide 6, 70 to 95% by mass of polyamide 6 copolymer, and 0 to 0.10% by mass of organic lubricant,
the layer C contains 70% by mass or more of polyamide 6 and 0.05 to 1% by mass of fine particles having an average particle diameter of 0.1 to 10 $\mu$m,
each layer is formed in order of the layer B, the layer A, and the layer C,
a critical surface tension, determined from contact angles of water, formamide, diiodomethane, ethylene glycol, and n-hexadecane measured at 25°C and 50% R.H., on a surface of the layer B is 27.0 mN/m or higher, and
a dispersion component $\gamma d$ of surface free energy on the surface of the layer B is 27.0 mJ/m$^2$ or higher and a hydrogen bond component $\gamma h$ of the surface free energy on the surface of the layer B is 10.0 mJ/m$^2$ or lower, determined from contact angles of water, diiodomethane, and n-hexadecane measured at 25°C and 50% R.H.,.

[2] The biaxially stretched polyamide film according to [1], wherein a mass ratio of a copolymerization component other than polyamide 6 in the polyamide 6 copolymer is 3 to 35% by mass with the polyamide 6 copolymer as 100% by mass.
[3] The biaxially stretched polyamide film according to [1] or [2], wherein the polyamide 6 copolymer is polyamide 6/66 and/or polyamide 6/12.
[4] A laminate film, comprising a sealant film and the biaxially stretched polyamide film according to any one of [1] to [3], wherein the sealant film is directly laminated on the surface of the layer B of the biaxially stretched polyamide film.
[5] A laminate film, comprising a printed layer, a sealant film, and the biaxially stretched polyamide film according to any one of [1] to [3], wherein

the printed layer is disposed on the surface of the layer B of the biaxially stretched polyamide film, and
the sealant film is laminated on the printed layer.

[6] The laminate film according to [4] or [5], wherein the laminate film has a water-resistant lamination strength of 3.0 N/15mm or higher.
[7] A packaging bag, comprising the laminate film according to [4] to [6].

The biaxially stretched polyamide film of the present invention has excellent tensile strength and impact strength for a biaxially stretched polyamide film due to the layer A containing 50 to 90% by mass of polyamide 6. The layer B can contribute to the above-described excellent characteristics of the biaxially stretched polyamide film, and also can make lamination strength with a sealant film very high. In particular, the biaxially stretched polyamide film can have significantly improved water-resistant lamination strength, and further has excellent wettability for printing ink and therefor has excellent printing suitability. By containing a certain amount of fine particles having an average particle diameter of 0.1 to 10 $\mu$m in the layer C, the coefficient of friction can be decreased, and when the polyamide film of the present invention is made into bags, the slipperiness between bags is good, so that the transportability of the bags is excellent when the bags are filled with contents.

ADVANTAGEOUS EFFECTS OF THE INVENTION

The biaxially stretched polyamide film and the laminate film of the present invention have high water-resistant lamination strength in addition to the excellent impact strength, etc., for a biaxially stretched polyamide film, and thus are effective for preventing a soup packaging bag, a watery material packaging bag, and the like from breaking due to impact or vibration during transportation.
Also, the biaxially stretched polyamide film and the laminate film used for a laminate body of the present invention have advantages of having good productivity, being economical, and having few defects such as a flaw, due to elimination of a coating process. Furthermore, the biaxially stretched polyamide film and the laminate film have an advantage of being hygienic since a coating agent is not laminated.

DESCRIPTION OF EMBODIMENTS

Hereinafter, the present invention will be described in detail.
The biaxially stretched polyamide film of the present invention is a polyamide film including at least three layers having different compositions.

[Layer A: base layer]

The layer A in the biaxially stretched polyamide film of the present invention serves as a base and is characterized by containing 50 to 90% by mass of polyamide 6 and 10 to 50% by mass of polyamide 6 copolymer. If the content of the polyamide 6 is less than 50% by mass, there is a possibility that sufficient impact strength, dimensional stability at high temperatures, and transparency cannot be obtained. In addition, by containing the polyamide 6 copolymer, the adhesive strength between the layer A and the layer B can be increased.

[Layer B: easily adhesive layer]

The layer B in the biaxially stretched polyamide film of the present invention serves to enhance adhesion to a sealant film or another film and is characterized by containing 5 to 30% by mass of polyamide 6, 70 to 95% by mass of polyamide 6 copolymer, and 0 to 0.10% by mass of organic lubricant. If the content of the polyamide 6 copolymer is less than 70% by mass, there is a possibility that sufficient water-resistant lamination strength cannot be obtained. Furthermore, the layer B does not contain organic lubricant, or when the layer B does contain organic lubricant, the content of the organic lubricant is 0.10% by mass or less. Furthermore, the layer B may contain 0.05 to 1% by mass of fine particles having an average particle diameter of 0.1 to 10 $\mu$m. By the fine particles, minute protrusions are formed on the surface of the layer B, so that the contact between laminated stretched film surfaces is reduced, making the film slippery.

[Layer C: slippery layer]

The layer C in the biaxially stretched polyamide film of the present invention serves to increase the slipperiness of the film and is characterized by containing 70% by mass or more of polyamide 6 and 0.05 to 1% by mass of fine particles having an average particle diameter of 0.1 to 10 $\mu$m. By containing 70% by mass or more of the polyamide 6, the strength of the biaxially stretched polyamide film can be maintained. The content of the polyamide 6 is more preferably 80% by mass or more and particularly preferably 90% by mass or more. By the layer C containing 0.05 to 1% by mass of the fine particles having an average particle diameter of 0.1 to 10 $\mu$m, minute protrusions are formed on the surface of the layer C, so that the contact between laminated stretched film surfaces is reduced, making the film slippery. Furthermore, the layer C may contain organic lubricant. The layer C may or may not necessarily contain polyamide 6 copolymer, but in a preferable mode, the layer C does not contain polyamide 6 copolymer.

[Polyamide 6]

Polyamide 6 is usually manufactured by ring-opening polymerization of $\varepsilon$-caprolactam. $\varepsilon$-caprolactam monomers in the polyamide 6 obtained by the ring-opening polymerization are usually removed with hot water, and then the polyamide 6 is dried and melt-extruded with an extruder. The polyamide 6 has a relative viscosity of preferably 1.8 to 4.5 and more preferably 2.6 to 3.2. If the relative viscosity is lower than 1.8, the film has insufficient impact strength. If the relative viscosity is higher than 4.5, the load on the extruder becomes large, and it becomes difficult to obtain a sheet before stretching.
As the polyamide 6, in addition to those polymerized from commonly used monomers derived from fossil fuel, polyamide 6 chemically recycled from waste polyamide 6 products such as waste plastic products, waste tire rubbers, fibers, and fishing nets can also be used. As a method for obtaining polyamide 6 chemically recycled from waste polyamide 6 products, for example, the following method can be used: used products made of polyamide are collected, and then depolymerized to obtain $\varepsilon$-caprolactam, the obtained $\varepsilon$-caprolactam is purified, and polyamide 6 is polymerized.
In addition, polyamide 6 mechanically recycled from waste materials discharged from a polyamide film production process can be used in combination. Mechanically recycled polyamide 6 is, for example, a raw material made by collecting off-specification films that are produced during the production of a biaxially stretched polyamide film and cannot be shipped, or waste materials generated as cut end materials (selvage trims), and pelletizing the films or materials through melt-extrusion or compression molding.

[Polyamide 6 copolymer]

The polyamide 6 copolymer used in the present invention has a mass ratio of the copolymerization components other than polyamide 6 of 3 to 35% by mass with the polyamide 6 copolymer as 100% by mass. If the ratio of the copolymerization components other than polyamide 6 is less than 3% by mass, there is a possibility that sufficient water-resistant lamination strength cannot be obtained. If the ratio of the copolymerization components in the copolymer is higher than 35% by mass, the crystallinity of the copolymer may become low, and handling may become difficult at the time of supplying the raw material. The ratio of the copolymerization components other than polyamide 6 is preferably 5 to 30% by mass and more preferably 5 to 25% by mass.

The polyamide 6 copolymer has a melting point of preferably 170 to 220°C, more preferably 175 to 215°C, and further preferably 180 to 210°C. If the melting point of the polyamide 6 copolymer is higher than 215°C, sufficient water-resistant adhesiveness may not be obtained. If the melting point of the polyamide 6 copolymer is lower than 170°C, handling may become difficult at the time of supplying the raw material.

The polyamide 6 copolymer is obtained by copolymerizing ε-caprolactam or aminocaproic acid with a copolymerization component in a ratio of 3 to 35% by mass. Here, the ratio of the copolymerization is in % by mass after monomers remaining after the copolymerization are removed with hot water or the like. The polyamide 6 copolymer is obtained by copolymerizing ε-caprolactam with, for example, a lactam other than ε-caprolactam, an amino acid other than aminocaproic acid, or a salt of a dicarboxylic acid and a diamine, as the copolymerization component. Examples of a monomer to be copolymerized with ε-caprolactam in the polymerization of the polyamide 6 copolymer include undecane lactam, lauryl lactam, amino undecanoic acid, amino lauric acid, adipic acid, pimelic acid, azelaic acid, sebacic acid, terephthalic acid, isophthalic acid, hexamethylenediamine, nonanediamine, decane diamine, methyl pentane diamine, m-xylylene diamine, and trimethyl hexamethylene diamine.

Examples of the polyamide 6 copolymer include polyamide 6/66 copolymer, polyamide 6/12 copolymer, polyamide 6/6T copolymer, polyamide 6/610 copolymer, polyamide 6/6I copolymer, polyamide 6/9T copolymer, polyamide 6/6I copolymer, and polyamide 6/11 copolymer. In the present invention, polyamide 6/66 copolymer and polyamide 6/12 copolymer are preferably used.

The polyamide 6/66 copolymer is obtained, for example, by a method in which ε-caprolactam is polymerized with hexamethylene diammonium adipate. Commercially available products such as Ultramid C3301 (manufactured by BASF) and Nylon 5023B (manufactured by UBE Corporation) can also be used. The polyamide 6/66 copolymer has a relative viscosity of preferably 1.8 to 4.5 and more preferably 2.6 to 3.2.

The polyamide 6/12 copolymer is obtained, for example, by a method in which ε-caprolactam is polymerized with ω-lauryl lactam. Commercially available products such as nylon resin 7024B (manufactured by UBE Corporation) can also be used. The polyamide 6/12 copolymer has a relative viscosity of preferably 1.8 to 4.5 and more preferably 2.5 to 4.0.

Each layer of the biaxially stretched polyamide film may contain 0.5 to 30% by mass of polyamide MXD6 (poly(m-xylylene adipamide)). A stretching property can be improved by containing the polyamide MXD6, and the effect of suppressing film breakage during production of the film and the effect of reducing film thickness unevenness are provided. In the present invention, it is particularly preferable to contain the polyamide MXD6 in the layer C. The content of the polyamide MXD6 is preferably 0.5 to 10% by mass and more preferably 1 to 8% by mass.

Each layer of the biaxially stretched polyamide film may contain 0.5 to 30% by mass of polyamide elastomer or polyolefin elastomer. Pinhole resistance can be improved by containing the polyamide elastomer or the polyolefin elastomer. Examples of the polyamide elastomer include polyamide elastomer composed of a hard segment of nylon 12 and a soft segment of polytetramethylene glycol, and the like. Examples of the polyolefin elastomer include a block copolymer having a polyolefin as a hard segment and various types of rubber component as a soft segment, and the like. Examples of the polyolefin forming the hard segment include ethylene, propylene, 1-butene, 1-pentene, and 4-methyl-1-pentene. Examples of the rubber component forming the soft segment include ethylene-propylene rubber (EPR), ethylene propylene diene rubber (EPDM), and polybutadiene.

[Fine particles]

The fine particles used in the present invention can be appropriately selected and used from inorganic lubricants such as silica, kaolin, and zeolite; and polymeric organic lubricants such as acrylic-based lubricants and polystyrene-based lubricants. It is noted that silica fine particles are preferably used from the viewpoint of transparency and slipperiness.

The fine particles have an average particle diameter of preferably 0.5 to 5.0 $\mu$m and more preferably 1.0 to 3.0 $\mu$m. If the average particle diameter is less than 0.5 $\mu$m, a large amount of the particles is required to be added to obtain good slipperiness, and if the average particle diameter exceeds 5.0 $\mu$m, the surface roughness of the film becomes too large to satisfy practical characteristics such as poor appearance, so that such an average particle diameter is not preferable.

The range of the pore volume of the fine particles is preferably 0.5 to 2.0 ml/g and more preferably 0.8 to 1.6 ml/g. If the pore volume is less than 0.5 ml/g, voids are likely to be generated and the transparency of the film deteriorates, and if the pore volume exceeds 2.0 ml/g, protrusions on the surface due to the fine particles are less likely to be formed and the slipperiness of the film deteriorates, so that such a pore volume is not preferable.

The content of the fine particles is 0.05 to 1.0% by mass, preferably 0.1 to 0.8% by mass, and more preferably 0.3 to 0.6% by mass.

[Organic lubricant]

The layer B and the layer C of the biaxially stretched polyamide film may each contain organic lubricant for the purpose of improving slipperiness. As the organic lubricant, a fatty acid amide and/or a fatty acid bisamide is preferably used. Examples of the fatty acid amide and/or the fatty acid bisamide include erucic acid amide, stearic acid amide, ethylene bisstearic acid amide, ethylene bisbehenic acid amide, and ethylene bisoleic acid amide.

In the present invention, the content of the fatty acid amide and/or the fatty acid bisamide in the layer B is 0% by mass as described above, or preferably 0.10% by mass or less, and further preferably 0.05% by mass or less. If the content of the fatty acid amide and/or the fatty acid bisamide exceeds the above range, the critical surface tension on the easily adhesive layer side becomes low, and the wettability for printing ink deteriorates, which causes printing unevenness, so that such a content is not preferable.

The content of the organic lubricant in the layer C is preferably 0.01 to 0.40% by mass and further preferably 0.05 to 0.30% by mass. If the content of the fatty acid amide and/or the fatty acid bisamide is less than the above range, the slipperiness is poor, and if the content of the fatty acid amide and/or the fatty acid bisamide exceeds the above range, spots may be generated on the film surface due to bleeding on the surface over time, so that such a content is not preferable in terms of quality.

[Various additives]

The layer A, the layer B, and/or the layer C of the biaxially stretched polyamide film used for the laminate body of the present invention may contain various additives such as a heat stabilizer, an antioxidant, an antistatic agent, a light resisting agent, an impact modifier, a lubricant, and an antiblocking agent, as long as the characteristics such as water-resistant lamination strength are not impaired.

[Biaxially stretched polyamide film]

One of the features of the present invention is that the layer B containing the polyamide 6 copolymer is laminated on the surface, of the layer A, on which a sealant film is to be laminated, whereby the degree of crystallinity of the surface on which the sealant film is to be laminated is decreased and the adhesiveness thereof is increased.

In the biaxially stretched polyamide film of the present invention, a critical surface tension $\gamma_c$, determined from contact angles of water, formamide, diiodomethane, ethylene glycol, and n-hexadecane measured at 25°C and 50% R.H., on the surface on the layer B side is preferably 27.0 mN/m or higher, further preferably 27.5 mN/m or higher, and most preferably 28.0 mN/m or higher.

When printing processing is performed on a film or the like, solvents used to dilute printing ink are generally solvents obtained by mixing toluene, methyl ethyl ketone, isopropyl alcohol, etc., as appropriate, and these diluting solvents have a surface tension of about 25 to 27 mN/m at normal temperature. On the other hand, if the critical surface tension of the film surface is lower than the surface tension of the ink, the ink cannot wet and spread sufficiently on the film surface, the shapes of printing dots may become unusable, and thus printing unevenness may occur.

Conventionally, as a method for improving the wettability of a film surface, a method in which a surface treatment such as a corona treatment or a plasma treatment is performed has been commonly known. However, such a method has a problem that as a result of increasing the hydrophilicity of the surface by performing these treatments, the lamination strength significantly decreases when water enters between the film surface and a sealant. The present inventors have found that by blending a certain amount of polyamide copolymer in the layer B, it is possible to obtain a polyamide film that has critical surface tension sufficient to allow printing ink to wet and spread thereon even without performing a corona treatment and that has high lamination strength even when water enters therein.

Here, for the critical surface tension, a plurality of liquids having known surface tensions are dropped onto the surface of a test sample in an atmosphere of 23°C and 50% RH using an image processing type solid-liquid interface analysis system (Dropmaster 500, manufactured by Kyowa Interface Science Co., Ltd.), and points that are obtained from $\cos\theta$ (Y axis) calculated from obtained contact angles $\theta$ and the surface tension of each liquid (X axis) are plotted in X-Y coordinates. The critical surface tension is defined as a value obtained by extracting the surface tension (X axis) corresponding to the intersection of cosθ = 1 and a straight line obtained by the least squares method from these points.

In the biaxially stretched polyamide film of the present invention, preferably, a dispersion component $\gamma_d$ of a surface free energy, determined from contact angles of water, diiodomethane, and n-hexadecane measured at 25°C and 50% R.H., on the surface on the layer B side is 27.0 mJ/m$^2$ or higher, and a hydrogen bond component $\gamma_h$ of the surface free energy is 10.0 mJ/m$^2$ or lower.

Here, the surface free energy will be described. A surface free energy ytotal is the sum (total) of three different components: a dispersion component γd, a polar component yp, and a hydrogen bond component γh. That is, the surface free energy γtotal is a value represented as γtotal = γd + γp + γh. The surface free energy γtotal and each component (the dispersion component γd, the polar component γp, and the hydrogen bond component γh) can be determined according to the Kitazaki-Hata method (see Yasuaki Kitazaki, et al, Journal of the Adhesion Society of Japan, Vol. 8, No. 3, 1972, pp. 131-141) from contact angles obtained by using a plurality of liquids having known contact angles as probe liquids and measuring the contact angle of each probe liquid using a contact angle meter.

If the dispersion component γd of the surface free energy of the film determined above is less than 27.0 mJ/m$^2$, the film has poor wetting and spreading properties for the diluting solvent of printing ink, and the shapes of printing dots may become unstable, resulting in printing unevenness. It is also known that the hydrogen bond component γh of the surface free energy increases with an increase in carbonyl and hydroxyl groups on the film surface due to a corona treatment or a plasma treatment. The hydrogen bond component γh of the surface free energy being 10.0 mJ/m$^2$ or lower indicates that a surface treatment such as a corona treatment is not substantially performed, and accordingly, even when moisture enters between the biaxially stretched polyamide film of the present invention and a sealant, sufficient lamination strength can be ensured.

The biaxially stretched polyamide film of the present invention has a coefficient of dynamic friction of preferably 1.0 or lower, more preferably 0.9 or lower, and further preferably 0.7 or lower. When the coefficient of dynamic friction of the film is lower, the slipperiness of the film is better, and it is easier to handle the film. If the coefficient of dynamic friction of the film is excessively low, the film is excessively slippery and it is difficult to handle the film. Thus, the coefficient of dynamic friction of the biaxially stretched polyamide film of the present invention is preferably 0.15 or higher.

The biaxially stretched polyamide film of the present invention has a degree of plane orientation of preferably 0.019 or higher and further preferably 0.020 or higher. If the degree of plane orientation of the biaxially stretched polyamide film is lower than 0.019, the orientation of the film may be insufficient, and the mechanical strength thereof may decrease.

The biaxially stretched polyamide film of the present invention has a breaking strength of preferably 150 MPa or higher, further preferably 170 MPa or higher, and most preferably 200 MPa or higher in the machine direction and the transverse direction thereof. If the breaking strength of the polyamide film is lower than 150 MPa, a problem, such as a bag thereof being easily broken when the bag falls, may arise.

The biaxially stretched polyamide film of the present invention has an impact strength of preferably 0.9 J/15μm or higher. The impact strength is more preferably 1.0 J/15μm or higher.

The biaxially stretched polyamide film of the present invention has a heat shrinkage rate in the range of 0.6 to 3.0% and preferably 0.6 to 2.5% in both the machine direction (MD direction) and the transverse direction (TD direction) thereof at 160°C for 10 minutes. If the heat shrinkage rate exceeds 3.0%, curling or shrinkage may occur when heat is applied in the next process such as lamination or printing. In addition, the lamination strength with a sealant film may be weakened. Although it is possible to set the heat shrinkage rate to be less than 0.6%, the film may become mechanically brittle. In addition, the productivity is deteriorated. Thus, such a heat shrinkage rate is not preferable.

[Method for producing biaxially stretched polyamide film]

The method for laminating the layer B and the layer C on the layer A is preferably a co-extrusion method using a feed block, a multi-manifold, or the like. Other than the co-extrusion method, a dry lamination method, an extrusion lamination method, or the like can also be selected. When lamination is performed by the co-extrusion method, a relative viscosity of polyamide to be used for the layer A, the layer B, and the layer C is preferably selected such that the difference between the melt viscosities of the layer A, the layer B, and the layer C is small.

The stretching method for obtaining the biaxially stretched polyamide film of the present invention may be either a sequential biaxial stretching method or a simultaneous biaxial stretching method. The sequential biaxial stretching method is preferable since the sequential biaxial stretching method is capable of increasing a film forming speed, and therefore, has an advantage in terms of manufacturing cost. The film may be a uniaxially stretched film made by a uniaxial stretching method. The uniaxial stretching method produces a uniaxially stretched polyamide film that has good lamination strength. However, the biaxially stretched polyamide film has better shock resistance and pinhole resistance. A conventional sequential biaxial stretching machine can be used. As for manufacturing conditions, preferable ranges include: an extrusion temperature of 200°C to 300°C, a stretching temperature in the machine direction (may be abbreviated as MD), which is a flow direction of the machine, of 50 to 100°C, a stretch ratio in the machine direction of 2 to 5 times, a stretching temperature in the transverse direction (may be abbreviated as TD) of the machine of 120 to 200°C, a stretch ratio in the transverse direction of 3 to 5 times, and a heat setting temperature of 200°C to 230°C.

As for the conditions for stretching in the machine direction (MD) for the biaxially stretched polyamide film, the stretch ratio is preferably 3 times or higher, further preferably 3.16 times or higher, and most preferably 3.2 times or higher. If the stretch ratio in the machine direction is lower than 3 times, the degree of orientation of the film becomes low, and sufficient mechanical strength cannot be obtained. The upper limit is preferably 5 times or lower, further preferably 4 times or lower, and most preferably 3.5 times or lower. If the stretch ratio in the machine direction is excessively high, film formation may become unstable, and the orientation of an obtained film may become excessively high, so that the adhesiveness to a sealant film may decrease.

As for the conditions for stretching in the transverse direction (TD) for the biaxially stretched polyamide film, the stretch ratio is preferably 3.0 times or higher, further preferably 3.2 times or higher, and most preferably 3.5 times or higher. If the stretch ratio in the transverse direction is lower than 3.0 times, the thickness evenness of the film deteriorates, and sufficient mechanical strength cannot be obtained. The upper limit is preferably 5 times or lower, further preferably 4.5 times or lower, and most preferably 4.2 times or lower. If the stretch ratio in the transverse direction is excessively high, film formation may become unstable, and the orientation of an obtained film may become excessively high, so that the adhesiveness to a sealant film may decrease.

Higher heat setting temperature of the laminated polyamide film of the present invention are preferred, because it tends to lead to higher water-resistant lamination strength. If the heat setting temperature is lower than 200°C, sufficient water-resistant lamination strength and thermal dimensional stability cannot be obtained in some cases.

The biaxially stretched polyamide film of the present invention preferably has a total thickness of 5 to 30 $\mu$m. If the total thickness of the biaxially stretched polyamide film is thicker than 30 $\mu$m, the performance of the biaxially stretched polyamide film is saturated in terms of strength. In addition, the flexibility is reduced when such a biaxially stretched polyamide film laminated with a sealant film is made into a packaging bag.

The layer A (base layer) has a thickness of preferably 4.0 $\mu$m or thicker and more preferably 4.5 $\mu$m or thicker. When the thickness of the layer A is 4.0 $\mu$m or thicker, a film suitable for printing processing and bag-making processing can be obtained. There is no specific upper limit for the thickness of the layer A, but the thickness of the layer A is preferably 25 $\mu$m or thinner and more preferably 20 $\mu$m or thinner. The ratio of the thickness of the layer A to the total thickness of the film is preferably 60% or higher, more preferably 70% or higher, and particularly preferably 80% or higher. The layer B (easily adhesive layer) preferably has a thickness of 0.5 $\mu$m or thicker. When the thickness of the layer B is set to be 0.5 $\mu$m or thicker, water-resistant lamination strength that is the object of the present invention can be obtained. There is no specific upper limit for the thickness of the layer B. However, when the thickness of the layer B is thicker than 5 $\mu$m, there is a possibility that the strength of the entire film decreases while the water-resistant lamination strength becomes saturated, so that the thickness of the layer B is preferably 5 $\mu$m or thinner. The layer C (slippery layer) preferably has a thickness of 0.5 $\mu$m or thicker. When the thickness of the layer C is set to be 0.5 $\mu$m or thicker, an effect of improving slipperiness can be obtained. There is no specific upper limit for the thickness of the layer C. However, thicker layer C is not preferable because the transparency of the film tends to deteriorate as the thickness of the layer C increases.


[Laminate film]

As a preferred application of the biaxially stretched polyamide film of the present invention, the biaxially stretched polyamide film is processed into a laminate film in which a sealant film or the like is laminated on the layer B (easily adhesive layer) side of the biaxially stretched polyamide film. The laminate film is then processed into a packaging bag such as a bottom seal bag, a side seal bag, a three-side seal bag, a pillow bag, a standing pouch, a gazette bag, and a rectangular-bottom bag. Examples of the sealant film include an unstretched linear low density polyethylene (LLDPE) film, an unstretched polypropylene (CPP) film, an ethylenevinyl alcohol copolymer resin (EVOH) film, etc.

In the present invention, a printed layer may be provided between the layer B (easily adhesive layer) of the biaxially stretched polyamide film and the sealant film. The present invention has good printing suitability at the layer B and has little transfer unevenness and fewer missing dots of printing ink, and thus it is preferable to form the biaxially stretched polyamide film, the printed layer, and the sealant film in this order.

The laminate film of the present invention preferably has a lamination strength of 4.0 N/15mm or higher in either the machine direction (MD) or the transverse direction (TD) of the film. The lamination strength is measured using a sample having a width of 15 mm and a length of 200 mm. If the lamination strength is 4.0 N/15mm or higher, when a packaging bag is produced using the laminate film, the sealed portion thereof has sufficient strength, so that a strong packaging bag that is difficult to tear can be obtained.

The laminate film of the present invention preferably has a water-resistant lamination strength (lamination strength under condition of water adhesion) of 3.0 N/15mm or higher in both the machine direction (MD) and the transverse direction (TD) of the film. If the above lamination strength is 3.0 N/15mm or higher, even when the laminate film is used for a liquid soup bag, a bag for a watery material, or the like, the sealed portion thereof has sufficient strength, so that a packaging bag that is difficult to tear can be obtained. In particular, also, for a packaging bag to be subjected to hydrothermal treatment at high temperatures such as retorting, the strength of the sealed portion thereof can be maintained.

EXAMPLES

Film evaluation was made based on the following measurement methods. Unless otherwise specified, measurements were performed in a measurement room having an environment of 23°C and a relative humidity of 65%.

(1) Thickness of film

Ten stacked layers, of an obtained film, having a length of 100 mm in the machine direction thereof were cut out from the film and conditioned in an environment of a temperature of 23°C and a relative humidity of 65% for 2 hours or longer. Then, the thickness was measured at positions at which the film was divided into ten equal parts in the transverse direction thereof (for a narrow film, the film was equally divided such that widths allowing a measurement of a thickness were ensured), using a thickness gauge manufactured by TESTER SANGYO CO,. LTD., and a value obtained by dividing the average value of the measurements by the number of stacked layers of the film was used as the thickness of the film.

The thickness of the layer A (base layer) was calculated on the basis of the ratio of resin discharge quantities for the layer A, the layer B, and the layer C.

(2) Critical surface tension

Using an image processing type solid-liquid interface analysis system (Dropmaster 500, manufactured by Kyowa Interface Science Co., Ltd.), four types of liquids having known surface tensions (water, formamide, diiodomethane, ethylene glycol, and n-hexadecane) were dropped onto the surface on the layer B side of a biaxially stretched polyamide film in an atmosphere of 23°C and a relative humidity of 50%, and contact angles thereof were measured. The measurement was performed for five test samples, and the average value thereof was obtained. Points (5 or more) obtained from $\cos\theta$ (Y axis) calculated from the contact angle $\theta$ and the surface tension of a test mixed liquid (X axis) were plotted in X-Y coordinates, and the surface tension (X axis) corresponding to the intersection of $\cos\theta = 1$ and a straight line obtained by a least-squares method from these points was used as a critical surface tension (mN/m).

(3) Surface free energy

Using a contact angle meter (full automatic contact angle meter DM-701, manufactured by Kyowa Interface Science Co., Ltd.), droplets of water (liquid quantity: 2.0 $\mu$L), diiodomethane (liquid quantity: 2.0 $\mu$L), and n-hexadecane (liquid quantity: 2.0 $\mu$L) were created on the surface on the layer B side of a biaxially stretched polyamide film in an atmosphere of 23°C and a relative humidity of 50%, and contact angles thereof were measured. The contact angle measured 1 second after each liquid was dropped onto the film was used as a contact angle. The contact angle data obtained for water, diiodomethane, and n-hexadecane by the above method was calculated using the "Kitazaki-Hata" theory to determine the dispersion component $\gamma$d, the polar component $\gamma$p, and the hydrogen bond component $\gamma$h of the surface free energy of the film, and the total of the respective components was used as a surface free energy $\gamma$total. This calculation was performed using multifunctional integrated analysis software FAMAS manufactured by Kyowa Interface Science Co., Ltd.

(4) Coefficient of dynamic friction

The coefficient of dynamic friction between surfaces of the layer C of a film was evaluated according to JIS-C2151 under the following conditions.

· Measurement atmosphere: 23°C, relative humidity of 50%
· Test piece: width 130 mm, length 250 mm
· Test speed: 150 mm/min

(5) Degree of plane orientation

A sample was taken from the center position in the transverse direction of a film. The refractive index (nx) in the machine direction of the film and the refractive index (ny) in the transverse direction of the film were measured for the sample by Method A of JIS K 7142-1996 with sodium D-rays as a light source using an Abbe refractometer, and a degree of plane orientation was calculated by a calculation equation (1).

$$\text{Degree of plane orientation } (\Delta P) = (nx + ny)/2 - nz \qquad (1)$$

(6) Breaking strength

According to JIS K 7113, a sample having a width of 10 mm and a length of 100 mm was cut out in the machine direction and the transverse direction of a film using a razor blade. The sample was left in an atmosphere of 23°C and a relative humidity of 65% for 12 hours, was measured in an atmosphere of 23°C and 35% RH under the conditions of a distance between chucks of 100 mm and a tensile speed of 100 mm/min, and the average value of five measurements was used. The measurement device used was AUTOGRAPH (registered trademark) AG5000A manufactured by SHIMADZU CORPORATION.

(7) Impact strength

Using a film impact tester manufactured by Toyo Seiki Seisalcu-sho, Ltd., measurement was performed 10 times in an environment having a temperature of 23°C and a relative humidity of 65%, and the average value was evaluated. The impact spherical surface used was one having a diameter of 1/2 inch. The unit used was J.

(8) Heat shrinkage rate

A film was cut into 5 pieces in the machine direction (MD) and the transverse direction (TD) such that each piece had a width of 20 mm and a length of 250 mm and the obtained 5 pieces were used as test pieces. On each test piece, bench marks were drawn 200 mm $\pm$ 2 mm apart from each other with respect to the center part of the test piece. The distance between the bench marks on the test piece before heating was measured at an accuracy of 0.1 mm. The test piece was hung in a hot air drier (manufactured by ESPEC CORP., PHH-202) in a no-load state, and a thermal treatment was performed under a heating condition of 160°C for 10 minutes. The test piece was taken out from a thermostatic chamber and cooled to room temperature. Then, the length and the width were measured at the same part as the part where the initial measurement was performed. The dimensional change rate of each test piece was measured in the machine direction and the transverse direction as a percentage of the dimensional change relative to the initial value. As the dimensional change rate in each direction, the average of the measurements in the direction was used.

(9) Lamination strength

A polyester-based adhesive agent [a mixture of TM-569 (product name) and CAT-10L (product name) manufactured by Toyo-Morton, Ltd., in a mass ratio of 7.2/1 (solid content concentration 23%)] was applied to a biaxially stretched polyamide film such that a resin solid content after drying was 3.2 g/m$^2$. Thereafter, 40 $\mu$m of a linear low density polyethylene film (L-LDPE film: manufactured by TOYOBO CO., LTD., LIX (registered trademark) L4102) was dry-laminated and then aged in an environment of 40°C for 2 days to obtain a laminate film.
Next, the laminate film obtained above was cut into a strip shape having a width of 15 mm and a length of 200 mm. One end of the laminate film was peeled at the interface between the biaxially stretched polyamide film and the linear low density polyethylene film, and the lamination strength of the strip-shaped laminate film was measured three times using AUTOGRAPH (registered trademark) AG-I (manufactured by SHIMADZU CORPORATION) under conditions of a temperature of 23 °C, a relative humidity of 50%, a tensile speed of 200 mm/min, and a peeling angle of 90°. The lamination strength was evaluated by the average value of the measurements.

(10) Water-resistant lamination strength (lamination strength under condition of water adhesion)

A laminate film produced by a method similar to that described in the description of the above lamination strength was cut into a strip shape having a width of 15 mm and a length of 200 mm. One end of the laminate film was peeled at the interface between the biaxially stretched polyamide film and the linear low density polyethylene film. The lamination strength was measured three times using AUTOGRAPH (registered trademark) AGS-J (manufactured by SHIMADZU CORPORATION) under conditions of a temperature of 23°C, a relative humidity of 50%, a tensile speed of 200 mm/min, and a peeling angle of 90° while water was being dropped with a dropper to the peeling interface of the strip-shaped laminate film. The lamination strength was evaluated by the average value of the measurements.

(11) Printability

Gravure printing was performed on films obtained in Examples and Comparative Examples using a gravure printing plate having a cell pitch of 100 μm and a gradation of 30%. For the ink, "LIOALPHA S R39 indigo" manufactured by TOYO INK CO., LTD. and a special No. 2 solvent were used, and the viscosity was adjusted to 17 seconds in a Zahn-viscosity cup #3. Then, ten pieces having a size of 15 mm × 30 mm were cut out from each of the printed films, and the number of printing-omission portions where there was no ink was counted. The case where the average of the numbers of printing-omission portions in the ten pieces was less than 10 was evaluated as "A", the case where such an average was 10 or larger and 20 or smaller was evaluated as "B", and the case where such an average was 21 or larger was evaluated as "C".

(12) Relative viscosity of raw material polyamide

A polyamide solution was prepared by dissolving 0.25 g of polyamide in 96% sulfuric acid in a 25 ml measuring flask so as to have a concentration of 1.0 g/dl, and a relative viscosity was measured at 20°C using the polyamide solution.

(13) Melting point of raw material polyamide

Measurement was performed according to JIS K7121 using a SSC5200 type differential scanning calorimeter manufactured by Seiko Instruments Inc., in a nitrogen atmosphere with a sample weight of 10 mg, a heating starting temperature of 30°C, and a temperature rising rate of 20°C/min, to obtain an endothermic peak temperature (Tmp) as a melting point.

[Example 1]

The following resin compositions were used as raw material resins for biaxially stretched polyamide films. The raw material resins used were dried before use such that the raw material resins had a moisture content of 0.1% by mass.

(a) Resin composition A

Polyamide 6 (relative viscosity: 2.8, melting point: 220°C): 70 parts by mass
Polyamide 6/66 copolymer (ratio of polyamide 66: 25% by mass, relative viscosity: 2.8, melting point: 198°C): 30 parts by mass

(b) Resin composition B

Polyamide 6 (relative viscosity: 2.8, melting point: 220°C): 15 parts by mass
Polyamide 6/66 copolymer (ratio of polyamide 66: 25% by mass, relative viscosity: 2.8, melting point: 198°C): 85 parts by mass
Silica fine particles (pore volume: 1.6 ml/g, average particle diameter: 3.9 μm): 0.54 parts by mass

(c) Resin composition C

Polyamide 6 (relative viscosity: 2.8, melting point: 220°C): 95 parts by mass
Polyamide MXD6 (relative viscosity: 2.65, melting point: 237°C): 5 parts by mass
Silica fine particles (pore volume: 1.6 ml/g, average particle diameter: 3.9 μm): 0.54 parts by mass
Ethylene bisstearic acid amide: 0.15 parts by mass

Using an apparatus including an extruder having a bore diameter of 60 mm for a layer A, two extruders having a bore diameter of 25 mm for a layer B and a layer C, and a co-extruding T-die having a width of 380 mm, the resin composition A for the layer A, the resin composition B for the layer B, and the resin composition C for the layer C were individually melt-extruded, and the layer B (easily adhesive layer), the layer A (base layer), and the layer C (slippery layer) were laminated in a feed block with a configuration of layer B (easily adhesive layer)/layer A (base layer)/layer C (slippery layer), and extruded from the T-die into a sheet. The sheet was brought into close contact with a cooling roll whose temperature was regulated to 20°C, to obtain a 200 μm laminated unstretched sheet.

The obtained laminated unstretched sheet was guided to a roll type stretching machine. The laminated unstretched sheet was stretched 1.7 times at 70°C and then further stretched 1.91 times at 70°C in the machine direction utilizing the difference between the circumferential speeds of rollers (MD stretch ratio: 3.25 times). Subsequently, this uniaxially stretched film was guided continuously to a tenter-type stretching machine and preheated at 110°C. Then, the uniaxially stretched film was stretched 3.9 times at 130°C in the transverse direction and subjected to a heat setting treatment at 210°C, and then a 5% relaxation treatment was performed at 210°C to obtain a three-layered laminated biaxially stretched polyamide film in which three types of layers, that is, the layer A, the layer B, and the layer C, were laminated in the order of layer B/layer A/layer C. As for the thickness of the biaxially stretched polyamide film, the structure of the feed block and the discharge quantities of the extruders were adjusted such that the biaxially stretched polyamide film had a total thickness of 15 μm, the layer A had a thickness of 12 μm, and each of the layer B and the layer C on the front and back sides had a thickness of 1.5 μm.

[Examples 2 to 5]

Biaxially stretched polyamide films were produced in the same manner as Example 1, except that in the film forming method of Example 1 described above, the ratio of the resin composition of each layer was changed to the conditions shown in Table 1.

[Example 6]

A biaxially stretched polyamide film was produced under the same conditions as in Example 1, except that 0.10 parts by mass of ethylene bisstearic acid amide was added to the resin composition B.

[Examples 7 and 8]

Biaxially stretched polyamide films were produced in the same manner as Example 1, except that polyamide 6/12 copolymer (7024B, manufactured by UBE Corporation, relative viscosity: 2.6, melting point: 201 °C) was used instead of the polyamide 6/66 copolymer, and the resin compositions shown in Table 1 were used.

[Table 1]

| | | | | Example | | | | | | | |
|---|---|---|---|---|---|---|---|---|---|---|---|
| | | | | 1 | 2 | 3 | 4 | 5 | 6 | 7 | 8 |
| Layer A composition | Polyamide 6 | | parts by mass | 70 | 90 | 50 | 70 | 70 | 70 | 70 | 70 |
| | Polyamide 6/66 | | parts by mass | 30 | 10 | 50 | 30 | 30 | 30 | - | - |
| | Polyamide 6/12 | | parts by mass | - | - | - | - | - | - | 30 | 30 |
| Layer B composition | Polyamide 6 | | parts by mass | 15 | 15 | 15 | 30 | 5 | 15 | 30 | 5 |
| | Polyamide 6/66 | | parts by mass | 85 | 85 | 85 | 70 | 95 | 85 | - | - |
| | Polyamide 6/12 | | parts by mass | - | - | - | - | - | - | 70 | 95 |
| | Fine particles | | parts by mass | 0.54 | 0.54 | 0.54 | 0.54 | 0.54 | 0.54 | 0.54 | 0.54 |
| | Fatty acid amide | | parts by mass | - | - | - | - | - | 0.10 | - | - |
| Layer C composition | Polyamide 6 | | parts by mass | 95 | 95 | 95 | 95 | 95 | 95 | 95 | 95 |
| | Polyamide MXD6 | | parts by mass | 5 | 5 | 5 | 5 | 5 | 5 | 5 | 5 |
| | Fine particles | | parts by mass | 0.54 | 0.54 | 0.54 | 0.54 | 0.54 | 0.54 | 0.54 | 0.54 |
| | Fatty acid amide | | parts by mass | 0.15 | 0.15 | 0.15 | 0.15 | 0.15 | 0.15 | 0.15 | 0.15 |
| Coating layer | | | - | - | - | - | - | - | - | - | - |
| Lamination configuration | | | - | B/A/C | B/A/C | B/A/C | B/A/C | B/A/C | B/A/C | B/A/C | B/A/C |
| Corona treatment | | | kW | - | - | - | - | - | - | - | - |
| Critical surface tension | | | mN/m | 28.2 | 28.1 | 28.3 | 28.3 | 28.3 | 27.1 | 28.3 | 28.3 |
| Surface free energy | Total | $\gamma$total | mJ/m$^2$ | 70.4 | 70.3 | 70.1 | 69.8 | 70 | 60.3 | 70.2 | 70 |
| | Dispersion component | $\gamma$d | mJ/m$^2$ | 27.4 | 27.3 | 27.4 | 27.5 | 27.4 | 27.2 | 27.3 | 27.4 |
| | Polar component | $\gamma$p | mJ/m$^2$ | 33.6 | 33.5 | 33.4 | 33.1 | 33.3 | 27.6 | 33.5 | 33.3 |
| | Hydrogen bond component | $\gamma$h | mJ/m$^2$ | 9.4 | 9.5 | 9.3 | 9.2 | 9.3 | 5.5 | 9.4 | 9.3 |
| Coefficient of dynamic friction | | | - | 0.66 | 0.66 | 0.66 | 0.66 | 0.66 | 0.66 | 0.66 | 0.66 |
| Degree of plane orientation | | | - | 0.022 | 0.024 | 0.020 | 0.021 | 0.019 | 0.022 | 0.021 | 0.021 |
| Breaking strength | MD direction | | MPa | 200 | 230 | 170 | 195 | 190 | 201 | 195 | 189 |
| | TD direction | | MPa | 230 | 250 | 210 | 225 | 212 | 231 | 225 | 210 |

13

(continued)

| | | | Example | | | | | | | |
|---|---|---|---|---|---|---|---|---|---|---|
| | | | 1 | 2 | 3 | 4 | 5 | 6 | 7 | 8 |
| Impact strength | | J/15μm | 1.20 | 1.25 | 1.10 | 1.21 | 1.15 | 1.19 | 1.21 | 1.13 |
| Heat shrinkage rate | MD direction | % | 1.0 | 1.0 | 1.0 | 1.0 | 1.0 | 1.0 | 1.0 | 1.0 |
| | TD direction | % | 1.4 | 1.4 | 1.4 | 1.4 | 1.4 | 1.4 | 1.4 | 1.4 |
| Lamination strength | Normal state | MD direction N/15mm | 8.8 | 8.0 | 9.0 | 8.5 | 8.5 | 8.5 | 8.5 | 8.5 |
| | | TD direction N/15mm | 3.8 | 3.5 | 4.0 | 3.7 | 3.7 | 3.6 | 3.7 | 3.7 |
| | Water adhesion | MD direction N/15mm | 5.2 | 5.5 | 5.5 | 3.2 | 5.3 | 5.1 | 3.1 | 5.2 |
| | | TD direction N/15mm | 3.7 | 3.9 | 3.9 | 3.1 | 3.9 | 3.7 | 3.1 | 3.8 |
| Printability | | - | A | A | A | A | A | A | A | A |

As shown in Table 1, the biaxially stretched polyamide films and the laminate films produced in Example 1 to Example 8 had sufficient lamination strength and good printability.

[Comparative Examples 1 to 3]

Biaxially stretched polyamide films were produced in the same manner as Example 1, except that in the film forming method of Example 1 described above, the resin composition of each layer was changed to the conditions shown in Table 2.

[Comparative Example 4]

A biaxially stretched polyamide film was produced in the same manner as Example 1, except that the resin composition C was not used, the resin composition B was used as the raw material resin for the layer C, and the stretch ratio in the machine direction was changed to 3.15 times.

[Comparative Example 5]

A biaxially stretched polyamide film was produced under the same conditions as in Example 1, except that 0.15 parts by mass of ethylene bissstearic acid amide was added to the resin composition B.

[Comparative Examples 6 and 7]

In Example 1, a corona discharge treatment was performed on the surface on the B side of the film subjected to stretching and heat setting and relaxation treatments. The corona discharge output in Comparative Example 6 was 0.1 kW, and the corona discharge output in Comparative Example 7 was 0.3 kW.

[Comparative Example 8]

The following resin compositions were used as raw material resins. The raw material resins used were dried before use such that the raw material resins had a moisture content of 0.1% by mass.

(d) Resin composition D

    Polyamide 6 (relative viscosity: 2.8, melting point: 220°C): 100 parts by mass (e) Resin composition E
    Polyamide 6 (relative viscosity: 2.8, melting point: 220°C): 100 parts by mass
    Silica fine particles (pore volume: 1.6 ml/g, average particle diameter: 3.9 $\mu$m): 0.54 parts by mass

Using an apparatus including an extruder having a bore diameter of 60 mm for a layer A, an extruder having a bore diameter of 25 mm for a layer B, and a co-extruding T-die having a width of 380 mm, the resin composition D for the layer A and the resin composition E for the layer B were individually melt-extruded, and the layer A and the layer B were laminated in a feed block with a configuration of layer B/layer A/layer B, and extruded from the T-die into a sheet. The sheet was brought into close contact with a cooling roll whose temperature was regulated to 20°C, to obtain a 200 $\mu$m laminated unstretched sheet.

The obtained laminated unstretched sheet was guided to a roll type stretching machine. The laminated unstretched sheet was stretched 1.7 times at 70°C and then further stretched 1.85 times at 70°C in the machine direction utilizing the difference between the circumferential speeds of rollers (MD stretch ratio: 3.15 times). Subsequently, this uniaxially stretched film was guided continuously to a tenter-type stretching machine and preheated at 110°C. Then, the uniaxially stretched film was stretched 3.9 times at 130°C in the transverse direction and subjected to a heat setting treatment at 210°C, and then a 5% relaxation treatment was performed at 210°C to obtain a three-layered laminated biaxially stretched polyamide film in which two types of layers, that is, the layer A and the layer B, were laminated in the order of layer B/layer A/layer B. As for the thickness of the biaxially stretched polyamide film, the structure of the feed block and the discharge quantities of the extruders were adjusted such that the biaxially stretched polyamide film had a total thickness of 15 $\mu$m, the layer A had a thickness of 12 $\mu$m, and each of the layers B on the front and back sides had a thickness of 1.5 $\mu$m.

[Comparative Example 9]

A biaxially stretched polyamide film was produced under the same conditions as in Comparative Example 8, except that 0.15 parts by mass of ethylene bisstearic acid amide was added to the resin composition E.

[Comparative Example 10]

In the film forming process of Comparative Example 9, after stretching in the machine direction using a roll stretching machine, a coating liquid 1 was applied to one side of the obtained uniaxially stretched film by a fountain bar coating method. Subsequently, the uniaxially stretched film was continuously guided to a tenter-type stretching machine and preheated at 110°C. Then, the uniaxially stretched film was stretched 3.9 times at 130°C in the transverse direction and subjected to a heat setting treatment at 210°C, and then a 5% relaxation treatment was performed at 210°C to obtain a three-layered laminated biaxially stretched polyamide film in which two types of layers, that is, the layer A and the layer B, were laminated in the order of layer B/layer A/layer B.

(Method for preparing coating liquid 1)

In a stainless steel autoclave equipped with an agitator, a thermometer, and a partial reflux condenser, 345 parts by weight of dimethyl terephthalate, 211 parts by weight of 1,4-butanediol, 270 parts by weight of ethylene glycol, and 0.5 parts by weight of tetra-n-butyl titanate were put, and a transesterification reaction was carried out from 160°C to 220°C for 4 hours. Then, 14 parts by weight of fumaric acid and 160 parts by weight of sebacic acid were added, and the temperature was increased from 200°C to 220°C over 1 hour to carry out an esterification reaction. Then, the temperature was increased to 255°C, and the reaction system was gradually depressurized and then reacted under reduced pressure of 0.22 mmHg for 1 hour and 30 minutes to obtain a hydrophobic polyester resin. The obtained polyester was pale yellow and transparent.

In a reactor equipped with an agitator, a thermometer, a reflux device, and a quantitative dropping device, 5 parts by weight of the hydrophobic polyester resin, 56 parts by weight of methyl ethyl ketone, and 19 parts by weight of isopropyl alcohol were put, and were heated and stirred at 65°C to dissolve the resin. After the resin was completely dissolved, 15 parts by weight of maleic anhydride was added to the polyester solution. Then, a solution of 10 parts by weight of styrene and 1.5 parts by weight of azobisdimethylvaleronitrile dissolved in 12 parts by weight of methyl ethyl ketone was dropped into the polyester solution at 0.1 ml/min, and the polyester solution was further kept stirred for 2 hours. After sampling for analysis from the reaction solution, 5 parts by weight of methanol was added. Then, 300 parts by weight of water and 15 parts by weight of triethylamine were added to the reaction solution, and the reaction solution was stirred for 1 hour. Then, the temperature in the reactor was raised to 100°C, and methyl ethyl ketone, isopropyl alcohol, and excess ammonia were distilled off to obtain a water-dispersed graft copolymer. The water-dispersed graft copolymer was pale yellow and transparent. The water-dispersed graft copolymer was diluted with water at water : isopropyl alcohol = 9:1 (weight ratio) so as to have a solid concentration of 10% to prepare the coating liquid 1.

[Table 2]

| | | | Comparative Example | | | | | | | | | |
|---|---|---|---|---|---|---|---|---|---|---|---|---|
| | | | 1 | 2 | 3 | 4 | 5 | 6 | 7 | 8 | 9 | 10 |
| Layer A composition | Polyamide 6 | parts by mass | 95 | 40 | 70 | 70 | 70 | 70 | 70 | 100 | 100 | 100 |
| | Polyamide 6/66 | parts by mass | 5 | 60 | 30 | 30 | 30 | 30 | 30 | 0 | 0 | 0 |
| | Polyamide 6/12 | parts by mass | - | - | - | | - - | - | - | | - - | - |
| Layer B coniposition | Polyamide 6 | parts by mass | 15 | 15 | 50 | 15 | 15 | 15 | 15 | 100 | 100 | 100 |
| | Polyamide 6/66 | parts by mass | 85 | 85 | 50 | 85 | 85 | 85 | 85 | - | - | - |
| | Polyamide 6/12 | parts by mass | - | - | - | - | - | - | - | - | - | - |
| | Fine particles | parts by mass | 0.54 | 0.54 | 0.54 | 0.54 | 0.54 | 0.54 | 0.54 | 0.54 | 0.54 | 0.54 |
| | Fatty acid amide | parts by mass | - | - | - | - | 0.15 | - | - | - | 0.15 | 0.15 |
| Layer C composition | Polyamide 6 | parts by mass | 95 | 95 | 95 | - | 95 | 95 | 95 | - | - | - |
| | Polyamide MXD6 | parts by mass | 5 | 5 | 5 | - | 5 | 5 | 5 | | - - | - |
| | Fine particles | parts by mass | 0.54 | 0.54 | 0.54 | - | 0.54 | 0.54 | 0.54 | - | - | - |
| | Fatty acid amide | parts by mass | 0.15 | 0.15 | 0.15 | - | 0.15 | 0.15 | 0.15 | - | - | - |
| Coating layer | | - | - | - | - | - | - | - | - | - | - | Present |
| Lamination configuration | | - | B/A/C | B/A/C | B/A/C | B/A/B | B/A/C | B/A/C | B/A/C | B/A/B | B/A/B | B/A/B |
| Corona treatment | | kW | - | - | - | - | - | 0.1 | 0.3 | - | 0.3 | 0.3 |
| Critical surface tension | | mN/m | 28.1 | 28.2 | 28.2 | 28.2 | 26.1 | 30.7 | 30.5 | 28.3 | 29.3 | 26.9 |
| Surface free energy | Total | $\gamma$total | mJ/m$^2$ | 70.1 | 70.2 | 69.9 | 70.4 | 47.9 | 77.5 | 80.6 | 69.7 | 80.3 | 73.3 |
| | Dispersion component | $\gamma$d | mJ/m$^2$ | 27.3 | 27.5 | 27.2 | 27.4 | 27.2 | 27.3 | 27.4 | 27.1 | 27.3 | 26.8 |
| | Polar component | $\gamma$p | mJ/m$^2$ | 33.4 | 33.2 | 33.1 | 33.6 | 19 | 30.7 | 31.9 | 33.1 | 31.9 | 35.8 |
| | Hydrogen bond component | $\gamma$h | mJ/m$^2$ | 9.4 | 9.5 | 9.6 | 9.4 | 1.7 | 19.5 | 21.3 | 9.5 | 21.1 | 10.7 |
| Coefficient of dynamic friction | | - | 0.66 | 0.66 | 0.66 | 1.20 | 0.65 | 0.72 | 0.75 | 0.66 | 0.66 | 0.65 |
| Degree of plane orientation | | - | 0.022 | 0.018 | 0.023 | 0.019 | 0.021 | 0.022 | 0.021 | 0.006 | 0.006 | 0.006 |

EP 4 309 894 A1

(continued)

| | | | Comparative Example | | | | | | | | | |
|---|---|---|---|---|---|---|---|---|---|---|---|---|
| | | | 1 | 2 | 3 | 4 | 5 | 6 | 7 | 8 | 9 | 10 |
| Breaking strength | MD direction | MPa | 210 | 140 | 205 | 168 | 200 | 199 | 201 | 250 | 250 | 250 |
| | TD direction | MPa | 235 | 200 | 235 | 209 | 231 | 229 | 231 | 260 | 260 | 260 |
| Impact strength | | J/15μm | 1.22 | 0.85 | 1.22 | 1.00 | 1.19 | 1.19 | 1.20 | 1.10 | 1.10 | 1.10 |
| Heat shrinkage rate | MD direction | % | 1.0 | 1.0 | 1.0 | 1.0 | 1.1 | 1.1 | 1.1 | 1.0 | 1.0 | 1.0 |
| | TD direction | % | 1.4 | 1.4 | 1.4 | 1.4 | 1.3 | 1.3 | 1.2 | 1.4 | 1.4 | 1.4 |
| Lamination strength | Normal state | MD direction | N/15mm | 3.5 | 8.9 | 7.2 | 8.8 | 8.4 | 7.5 | 7.4 | 7.0 | 7.0 | 8.6 |
| | | TD direction | N/15mm | 3.5 | 4.2 | 3.0 | 3.8 | 3.7 | 5.5 | 5.3 | 3.2 | 3.2 | 8.2 |
| | Water adhesion | MD direction | N/15mm | 3.5 | 3.5 | 1.8 | 5.2 | 5.0 | 1.5 | 1.1 | 2.8 | 1.0 | 3.1 |
| | | TD direction | N/15mm | 3.5 | 3.5 | 1.5 | 3.7 | 3.4 | 1.5 | 1.0 | 2.6 | 1.0 | 2.7 |
| Printability | | - | A | A | A | A | B | A | A | A | A | B |

In Comparative Example 1, since the content of polyamide 6/66 in the layer A was low, and the concentration difference with the layer B was large, the adhesive strength between the layers was low, so that the lamination strength decreased. In Comparative Example 2, since the content of polyamide 6/66 in the layer A was high, it was difficult to cause orientation by stretching, resulting in lower mechanical strength. In Comparative Example 3, since the content of polyamide 6/66 in the layer B was low, the adhesiveness between the sealant and the polyamide film was low, resulting in lower lamination strength. In Comparative Example 4, since the layer C was not laminated, the slipperiness became insufficient, and since the ratio of polyamide 6/66 in each layer was high, it was difficult to cause orientation, resulting in lower mechanical strength. In Comparative Example 5, since the amount of fatty acid amide contained in the layer B was large, the critical surface tension decreased, resulting in poor printability. In Comparative Example 6 and Comparative Example 7, the hydrogen bond component of the surface free energy was increased by performing the corona treatment, resulting in lower lamination strength under water adhesion. In Comparative Example 8, polyamide 6/66 was not contained, resulting in inferior water-resistant lamination strength. In Comparative Example 9, the wettability was improved by the corona treatment, and the printability was able to be improved, but the hydrogen bond component of the surface free energy was increased, resulting in lower water-resistant lamination strength. In Comparative Example 10, the adhesiveness was able to be improved by coating, but the printability was inferior.

**Claims**

1. A biaxially stretched polyamide film comprising a layer A, a layer B, and a layer C, wherein

   the layer A contains 50 to 90% by mass of polyamide 6 and 10 to 50% by mass of polyamide 6 copolymer,
   the layer B contains 5 to 30% by mass of polyamide 6, 70 to 95% by mass of polyamide 6 copolymer, and 0 to 0.10% by mass of organic lubricant,
   the layer C contains 70% by mass or more of polyamide 6 and 0.05 to 1% by mass of fine particles having an average particle diameter of 0.1 to 10 $\mu$m,
   each layer is formed in order of the layer B, the layer A, and the layer C,
   a critical surface tension, determined from contact angles of water, formamide, diiodomethane, ethylene glycol, and n-hexadecane measured at 25°C and 50% R.H., on a surface of the layer B is 27.0 mN/m or higher, and
   a dispersion component yd of surface free energy on the surface of the layer B is 27.0 mJ/m$^2$ or higher and a hydrogen bond component yh of the surface free energy on the surface of the layer B is 10.0 mJ/m$^2$ or lower, determined from contact angles of water, diiodomethane, and n-hexadecane measured at 25°C and 50% R.H.

2. The biaxially stretched polyamide film according to claim 1, wherein a mass ratio of a copolymerization component other than polyamide 6 in the polyamide 6 copolymer is 3 to 35% by mass with the polyamide 6 copolymer as 100% by mass.

3. The biaxially stretched polyamide film according to claim 1 or 2, wherein the polyamide 6 copolymer is polyamide 6/66 and/or polyamide 6/12.

4. A laminate film, comprising a sealant film and the biaxially stretched polyamide film according to any one of claims 1 to 3, wherein the sealant film is directly laminated on the surface of the layer B of the biaxially stretched polyamide film.

5. A laminate film, comprising a printed layer, a sealant film, and the biaxially stretched polyamide film according to any one of claims 1 to 3, wherein

   the printed layer is disposed on the surface of the layer B of the biaxially stretched polyamide film, and
   the sealant film is laminated on the printed layer.

6. The laminate film according to claim 4 or 5, wherein the laminate film has a water-resistant lamination strength of 3.0 N/15mm or higher.

7. A packaging bag, comprising the laminate film according to any one of claims 4 to 6.

## INTERNATIONAL SEARCH REPORT

| International application No. |
| --- |
| **PCT/JP2022/012054** |

| A. | CLASSIFICATION OF SUBJECT MATTER |
| --- | --- |

***B32B 27/18***(2006.01)i; ***B32B 27/34***(2006.01)i; ***B65D 65/40***(2006.01)i
FI:    B32B27/34; B32B27/18 Z; B65D65/40 D

According to International Patent Classification (IPC) or to both national classification and IPC

| B. | FIELDS SEARCHED |
| --- | --- |

Minimum documentation searched (classification system followed by classification symbols)

B32B27/18; B32B27/34; B65D65/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2020/195795 A1 (TOYOBO CO., LTD.) 01 October 2020 (2020-10-01)<br>claims, paragraphs [0001], [0010], [0014], [0044], examples 2, 9 | 1-7 |
| Y | JP 2003-71937 A (TOPPAN PRINTING CO LTD) 12 March 2003 (2003-03-12)<br>claims, paragraph [0029] | 1-7 |
| A | JP 2002-29014 A (TOYO BOSEKI KABUSHIKI KAISHA) 29 January 2002 (2002-01-29)<br>entire text | 1-7 |
| A | JP 2002-103446 A (TOYO BOSEKI KABUSHIKI KAISHA) 09 April 2002 (2002-04-09)<br>entire text | 1-7 |
| A | JP 2000-309076 A (TOYO BOSEKI KABUSHIKI KAISHA) 07 November 2000<br>(2000-11-07)<br>entire text | 1-7 |
| A | WO 02/16133 A1 (TOYO BOSEKI KABUSHIKI KAISHA) 28 February 2002 (2002-02-28)<br>entire text | 1-7 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 May 2022** | **31 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

<div>International application No.</div>

**PCT/JP2022/012054**

| Patent document cited in search report | | | Publication date (day/month/year) | Patent family member(s) | | | Publication date (day/month/year) |
|---|---|---|---|---|---|---|---|
| WO | 2020/195795 | A1 | 01 October 2020 | KR 10-2021-0148190 | | A | |
| | | | | TW 202102373 | | A | |
| JP | 2003-71937 | A | 12 March 2003 | (Family: none) | | | |
| JP | 2002-29014 | A | 29 January 2002 | (Family: none) | | | |
| JP | 2002-103446 | A | 09 April 2002 | (Family: none) | | | |
| JP | 2000-309076 | A | 07 November 2000 | US 6376093 | | B1 | |
| | | | | claims, examples | | | |
| | | | | EP 960903 | | A2 | |
| WO | 02/16133 | A1 | 28 February 2002 | US 2004/0023049 | | A1 | |
| | | | | claims, example | | | |
| | | | | EP 1314550 | | A1 | |

Form PCT/ISA/210 (patent family annex) (January 2015)

## REFERENCES CITED IN THE DESCRIPTION

**Patent documents cited in the description**

- JP 2000238216 A
- JP 2003251772 A
- WO 2019065161 A
- WO 2020195795 A

**Non-patent literature cited in the description**

- **YASUAKI KITAZAKI et al.** *Journal of the Adhesion Society of Japan,* 1972, vol. 8 (3), 131-141